# EUROPÄISCHE PATENTSCHRIFT

(11) **EP 2 743 177 B1**
(45) Veröffentlichungstag und Bekanntmachung des Hinweises auf die Patenterteilung: **14.09.2016**
(21) Anmeldenummer: 13197105.3
(22) Anmeldetag: 13.12.2013
(51) Int. Cl.: B64C 9/16

(54) **Gekrümmtes Flügelprofil mit einer schwenkbaren Hinterkantenklappe**
Wing with trailing edge flap
Aile muni d'un volet de bord de fuite

(30) Priorität: 17.12.2012 DE 102012112405
(43) Veröffentlichungstag der Anmeldung: 18.06.2014
(73) Patentinhaber: Airbus Defence and Space GmbH, 85521 Ottobrunn (DE)
(72) Erfinder: Dipl.-Ing. Storm, Stefan, 85716 Unterschleißheim (DE); Dr.-Ing. Wildschek, Andreas, 85521 Riemerling (DE)
(74) Vertreter: Rasch, Michael

(56) Entgegenhaltungen:
- EP-A1- 1 468 909
- EP-A1- 1 535 836
- EP-A2- 1 686 056
- DE-A1- 19 716 164
- US-A- 2 329 133
- US-A- 2 478 830
- US-A1- 2009 026 311

## Beschreibung

Die Erfindung betrifft ein gekrümmtes Flügelprofil für ein Luftfahrzeug mit mindestens einer schwenkbaren Hinterkantenklappe, die mittels mindestens eines Scharniers mit einer Scharnierachse am Flügelprofil angebracht ist.

Herkömmlicherweise werden bei Luftfahrzeugen Hinterkantenklappen vornehmlich in Bereichen geradliniger Erstreckung der Flügelprofile angeordnet, da bei gekrümmten Flügelprofilen geometrische Probleme beim Übergang vom Flügelprofil auf die normalerweise geradlinigen Hinterkantenklappe bestehen, die bei größeren Krümmungen der Flügelprofile zu größeren Spalten zwischen beiden Bauteilen führen.

Bei der Tendenz zur Wirkungsgradoptimierung besteht das Bedürfnis, zur aerodynamischen Verbesserung gekrümmte Flügelprofile, z.B. im Bereich der Tragflügelenden, in Form von Winglets, auszubilden und gleichzeitig dort auch Hinterkantenkappen vorzusehen. Gleichzeitig ist man bestrebt, den Bereich der laminaren Tragflügelumströmung zu verbessern oder aerodynamische Lasten auf den Flügel bzw. Winglet zu reduzieren. Ein Spalt oder eine Unebenheit zwischen Flügelprofil und Hinterkantenkappe führt jedoch unweigerlich zu einem Übergang in den turbulenten Bereich.

Hiervon ausgehend liegt der Erfindung die Aufgabe zugrunde, bei gattungsgemäß gekrümmten Flügelprofilen Hinterkantenkappen auszubilden, die einen möglichst geringen Übergangsspalt aufweisen, der sich bei Klappenausschlägen nicht ändert.

Die Lösung dieser Aufgabe ergibt sich aus den Merkmalen des Anspruchs 1. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Insbesondere wird die Aufgabe dadurch gelöst, dass im Erstreckungsbereich der mindestens einen Hinterkantenklappe für Ebenen senkrecht zur Scharnierachse die Außenhautkontur der Hinterkantenklappe bestimmt ist durch das Lot vom Scharnierachsenpunkt auf die obere bzw. untere Außenhaut des Flügelprofils bzw. deren virtuelle Verlängerung, wobei die Lotfußpunkte jeweils einen Radius definieren, mit dem sich die obere und untere Außenhautkontur der Hinterkantenklappe in Strömungsrichtung mindestens um den Schwenkbereich erstrecken und ferner die Außenhaut des Flügelprofils unter Ausbildung eines konstanten Spaltes unmittelbar vor dem Lotfußpunkt endet. Die obere und unteren Außenhaut des Flügelprofils endet dabei also in konstantem Abstand vom jeweiligen Lotfußpunkt.

Dabei ist die Querschnittsfläche des Flügelprofils vorzugsweise in Spannweitenrichtung verschieden. Die Hinterkantenklappe ist dabei ebenfalls gekrümmt und weist vorzugsweise in Spannweitenrichtung verschiedene Querschnittsflächen auf. Darüber hinaus bleibt bei Klappenausschlägen ein stetiger Übergang ohne Sprünge oder Stufen.

Die Erfindung gewährleistet auch bei stark gekrümmten Flügelprofilen einen konstanten, geringen Spalt von ca. 1 bis 3 mm unabhängig von der Stellung der Hinterkantenklappe.

Gemäß einer Weiterbildung der Erfindung erfolgt die Bestimmung der Lotfußpunkte an mindestens zwei Schnittebenen und die Bestimmung der Außenhautkontur dazwischen erfolgt über eine Interpolation der Außenhautkontur zwischen diesen Schnittebenen in Spannweitenrichtung. Diese Ausbildung ist konstruktiv besonders einfach.

Gemäß einer alternativen vorteilhaften Weiterbildung der Erfindung erfolgt die Bestimmung der Lotfußpunkte kontinuierlich für jede Ebene entlang der Scharnierachse. Diese Ausbildung hat den Vorteil, dass der Spalt überall konstant ist und keinerlei Absätze oder Sprünge zwischen dem Ende des Profilflügels und der Hinterkantenklappe entstehen.

Gemäß einer vorteilhaften Weiterbildung der Erfindung ist der Spalt von einer am Flügelprofil angebrachten Dichtlippe verschlossen. Gerade weil durch die erfindungsgemäße Ausbildung ein über die Längserstreckung der Hinterkantenklappe und unabhängig vom Ausschlag desselben konstanter Spalt erzielbar ist, kann dieser durch präzise gefertigte Dichtlippen verschlossen und somit ein praktisch vollständig glatter Übergang vom Flügelprofil auf die Hinterkantenklappe erreicht werden.

Gemäß einer vorteilhaften Weiterbildung der Erfindung sind an dem Flügelprofil mehrere Hinterkantenklappen mit unterschiedlich orientierten Scharnierachsen angebracht, wobei jeweils benachbarte Hinterkantenklappen mittels flexibler Außenhäuten miteinander verbunden sind. Auf diese Weise kann auch bei extrem stark gekrümmten Flügelprofilen über abschnittsweise Hinterkantenklappen eine quasi durchgängige Hinterkantenklappe bereitgestellt werden.

Gemäß einer vorteilhaften Weiterbildung der Erfindung umfasst die mindestens eine Hinterkantenklappe eine in Richtung des sich verbreiternden Flügelprofils erstreckende Achsverlängerung mit einem sich in Richtung Außenhaut erstreckenden Hebelarm, an dem ein sich im Inneren des Flügelprofils befindlicher Aktuator angreift. Durch diese Anbringung des Hebelarms kann der maximale Bauraum ausgenutzt und dabei ein möglichst großer Hebelarm realisiert werden. Die Größe des Aktuators und damit die verfügbare Aktuatorkraft ist durch den Bauraum begrenzt. Durch den großen Hebelarm kann man dennoch ausreichend große Stellmomente erzielen, ohne dabei Bauteile außerhalb der aerodynamisch optimierten Außenkontur anbringen zu müssen, was eine Störung der Strömung, und damit einen Anstieg des Widerstandes zur Folge hätte.

Zum Ausgleich der Verformungen aufgrund der Flexibilität des Flügels ist die Verbindung des Hebelarms mit dem Aktuatorgestänge vorteilhafter Weise durch einen Kugelgelenkkopf realisiert.

Weitere Vorteile, Merkmale und Einzelheiten ergeben sich aus der nachfolgenden Beschreibung, in der - unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung. Gleiche, ähnliche und/oder funktionsgleiche Teile sind mit gleichen Bezugszeichen versehen. Es zeigen:
- Figur 1:: eine schematische Darstellung eines gekrümmten Flügelabschnitts und drei Querschnitte desselben;
- Figur 2:: eine schematische Querschnittsdarstellung des stromabwärtigen Bereichs eines gekrümmten Flügelprofils mit Hinterkantenklappe;
- Figur 3:: die Ausführung von Figur 2 in drei verschiedenen Stellungen;
- Figur 4:: eine schematische Darstellung eines gekrümmten Flügels mit 3 Querschnitten mit Darstellung einer Aktuatoranordnung.

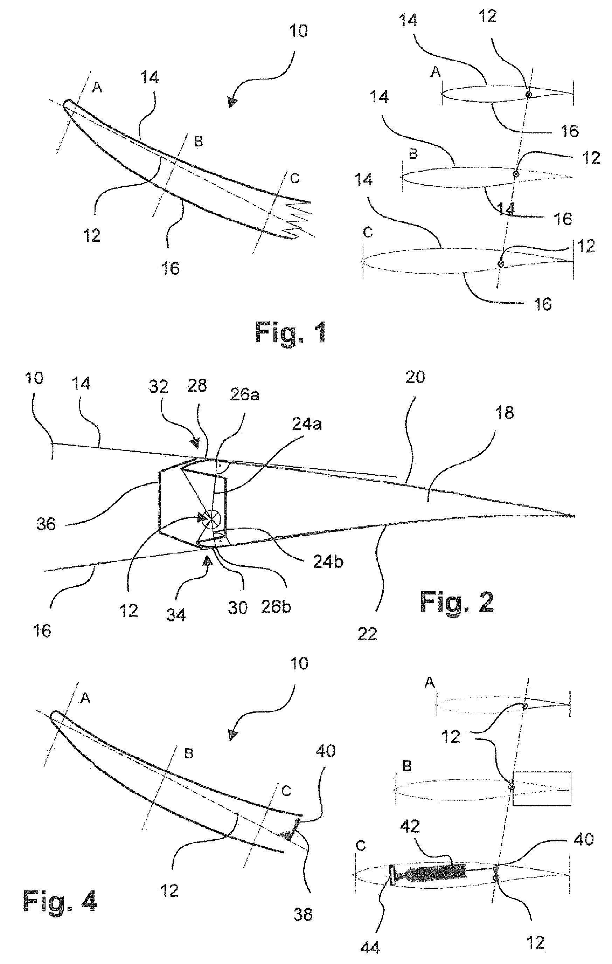

In Figur 1 sind eine schematische Darstellung eines gekrümmten Flügelabschnitts 10 sowie 3 Querschnitte entlang der Linien A, B und C dargestellt. Zu erkennen ist dabei eine Scharnierachse 12 für eine nicht in Figur 1 gezeigte Hinterkantenklappe, die notwendigerweise aufgrund geometrischer Umstände je nach Position entlang der Scharnierachse 12 eine bezogen auf die Querschnitte A, B,C unterschiedliche Position einnimmt, also verschieden weit von der oberen bzw. unteren Außenhaut 14, 16 des Flügelabschnitts 10 entfernt ist. Die Querschnitte können ganz unterschiedlich geformt sein, d.h. sie müssen zueinander nicht ähnlich sein. Theoretisch kann sich die Hinterkantenklappe bis kurz vor den Punkt erstrecken, wo die Scharnierachse 12 die obere 14 oder untere 16 Außenhaut schneidet.

Figur 2 zeigt eine schematische Querschnittsdarstellung des stromabwärtigen Bereichs des gekrümmten Flügelprofils 10 mit einer Hinterkantenklappe 18. Die Schnittebene liegt dabei senkrecht zur Scharnierachse 12. Die Kontur der oberen Außenhaut 20 der Hinterkantenklappe 18 ergibt sich durch das Fällen eines Lotes 24a von der Scharnierachse 12 auf die kaum gekrümmte Kontur der oberen Außenhaut 14 des Flügelabschnitts 10. Der erster Lotfußpunkt 26a bildet den Beginn der Oberhautfläche 20 der Hinterkantenklappe 18. In stromaufwärtiger Richtung weist die Kontur der oberen Außenhaut 20 einen Bogen 28 auf mit dem Radius des Lotes 24a. In analoger Weise ergibt sich ein zweiter Lotfußpunkt 26b aus dem Lot 24b von der Scharnierachse 12 auf die Kontur der unteren Außenhaut 16 des Flügelabschnitts 10. Die oberen Außenhaut 14 des Flügelabschnitts 10 endet kurz vor dem Lotfußpunkt 26a unter Ausbildung eines möglichst kleinen Spaltes.

Von den Lotfußpunkten 26a, 26b aus verläuft die obere Außenhautkontur 20 der Hinterkantenklappe 18 - abgesehen von einem möglichst kleinen Spalt 32 - als stetige Fortsetzung der oberen Außenhaut 14 des Flügelabschnitts 10 ohne Sprünge oder Stufen. Gleiches gilt für die untere Außenhaut 16, wo die untere Außenhautkontur 22 der Hinterkantenklappe 18 abgesehen von dem Spalt 34 als stetige Fortsetzung der unteren Außenhaut 16 des Flügelabschnitts 10 ausgebildet ist. Zwischen den stromabwärtigen Enden der oberen 14 und unteren Außenhaut 16 kann eine Verkleidung 36 vorgesehen sein.

Die Bogenabschnitte 28, 30 weisen eine derartige Erstreckung auf, dass die aerodynamisch erforderlichen Stellungen der Hinterkantenklappe 18 möglich sind, ohne dass sich die jeweiligen Spalte 32, 34 vergrößern. Dazu enden die obere und untere Außenhaut 14, 16 des Profilflügels 10 so (bzw. geht in die Verkleidung 36 über), dass die Spalte 32, 34 konstant bleiben.

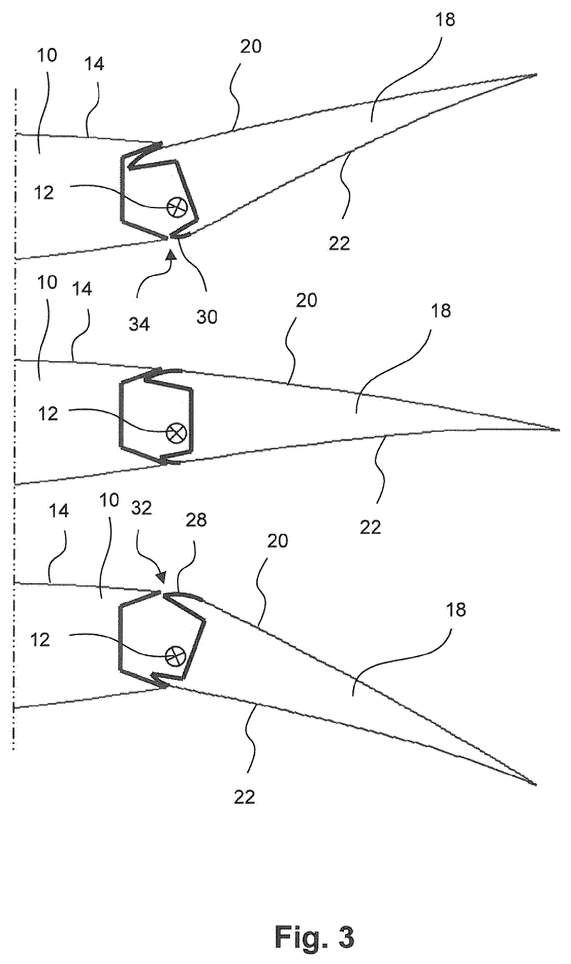

Figur 3 zeigt die Ausführung von Figur 2 in drei verschiedenen Stellungen der Hinterkantenklappe 18. Es sei die in den Figuren 2 und 3 dargestellte Ausführung in der Ebene A von Figur 1 ausgebildet. Die entsprechenden Ausführungen an anderen Positionen der Scharnierachse 12, beispielsweise in den Ebenen B und C, sind entsprechend anders, da die Position der Scharnierachse 12 relativ zu der oberen 14 bzw. unteren 16 Außenhaut anders ist und demnach die Länge der Lots 24a, 24b und damit auch die Krümmungsradien der jeweiligen Bogenabschnitte 28, 30 anders sind. Zudem ist ersichtlich, dass bei ausgeschlagener Klappe nicht nur die Fortsetzung der Außenhaut auf beiden Seiten stetig ist sondern dass nur auf der Druckseite ein Knick entsteht und auf der Saugseite ein fließender Übergang bestehen bleibt.

In den Figuren sind jeweils die Spalte 32, 34 dargestellt. Vorzugsweise sind diese Spalte 32, 34 durch nicht dargestellte Dichtlippen überbrückt, die im Bereich der stromabwärtigen Enden der oberen 14 bzw. unteren 16 Außenhäute befestigt sind.

Figur 4 zeigt eine schematische Darstellung eines gekrümmten Flügels mit drei Querschnitten analog Figur 1 mit Darstellung einer Aktuatoranordnung. An der Scharnierachse 12 ist ein Hebelarm 38 ausgebildet, und zwar an der Seite, wo sich der Flügel 10 verbreitert. Der Hebalarm 38 kann innerhalb des Bereiches der Klappenerstreckung oder außerhalb dieses Bereiches angeordnet sein. Das Ende des Hebelarms 38 ist über ein Kugelgelenk 40 mit einem in Längsrichtung des Flügels 10 ausgerichteten Aktuator 42 gekoppelt, der sich im vorderen Bereich des Flügels 10 an einer Stütze 44 abstützt. Dadurch steht ein längerer Hebelarm zur Verfügung, (als wenn dieser innerhalb der Erstreckung der Hinterkantenklappe angeordnet wird), es stehen also größere Stellmomente zur Verfügung bzw. der Aktuator 42 kann baulich kleiner ausgeführt werden als mit einem kürzeren Hebelarm. Die Kugelkopfverbindung dient zum Ausgleich der Verformungen aufgrund der Flexibilität des Flügels.

### Bezugszeichenliste

- 10: Flügelabschnitt
- 12: Scharnierachse
- 14: obere Außenhaut
- 16: untere Außenhaut
- 18: Hinterkantenklappe
- 20: obere Außenhaut von 18
- 22: untere Außenhaut von 18
- 24a,b: Lot
- 26a, b: Lotfußpunkt
- 28: oberer Bogenabschnitt von 18
- 30: unterer Bogenabschnitt von 18
- 32: oberer Spalt
- 34: unterer Spalt
- 36: Verkleidung
- 38: Hebelarm
- 40: Kugelgelenk
- 42: Aktuator
- 44: Stütze

## Patentansprüche

1. Gekrümmter Flügelabschnitt (10) für ein Luftfahrzeug, der in Frontansicht gekrümmt ist und mindestens eine schwenkbare Hinterkantenklappe (18) umfasst, die mittels mindestens eines Scharniers mit einer Scharnierachse (12) am Flügelabschnitt (10) angebracht ist, **dadurch gekennzeichnet, dass** im Erstreckungsbereich der mindestens einen Hinterkantenklappe (18) für mehrere Ebenen (A,B,C) senkrecht zur Scharnierachse (12) die Außenhautkontur (20, 22) der Hinterkantenklappe (18) bestimmt ist durch das Lot (24) vom Scharnierachsenpunkt (12) auf die obere bzw. untere Außenhaut (14, 16) des Flügelabschnitts (10) bzw. dessen virtuelle Verlängerung, wobei die Lotfußpunkte (26) jeweils Radien definieren, mit dem sich die obere und untere Außenhautkontur (28, 30) der Hinterkantenklappe (18) in Strömungsrichtung mindestens um den Schwenkbereich der Hinterkantenklappe erstrecken, und ferner die Außenhaut (14, 16) des Flügelabschnitts (10) jeweils unter Ausbildung eines Spaltes (32, 34) in konstantem Abstand unmittelbar vor dem jeweiligen Lotfußpunkt (26) endet.

2. Flügelabschnitt und Hinterkantenklappe nach Anspruch 1, **dadurch gekennzeichnet, dass** die Bestimmung der Lotfußpunkte (26) an mindestens zwei Schnittebenen erfolgt und die Außenhautkonturen (28,30) dazwischen über eine Interpolation zwischen diesen Schnittebenen in Spannweitenrichtung erfolgt.

3. Flügelabschnitt und Hinterkantenklappe nach Anspruch 1, **dadurch gekennzeichnet, dass** die Bestimmung der Lotfußpunkte (26) kontinuierlich für jede Ebene (A, B, C) entlang der Scharnierachse (12) erfolgt.

4. Flügelabschnitt und Hinterkantenklappe nach einem der vorherigen Ansprüche, **dadurch gekennzeichnet, dass** der Spalt (32, 34) von einer am Flügelabschnitt (10) angebrachten Dichtlippe verschlossen ist.

5. Flügelabschnitt und Hinterkantenklappe nach einem der vorherigen Ansprüche, **dadurch gekennzeichnet, dass** daran mehrere Hinterkantenklappen (18) mit unterschiedlich orientierten Scharnierachsen angebracht sind, wobei jeweils benachbarte Hinterkantenklappen mittels flexibler Außenhäuten miteinander verbunden sind.

6. Flügelabschnitt und Hinterkantenklappe nach einem der vorherigen Ansprüche, **dadurch gekennzeichnet, dass** die mindestens eine Hinterkantenklappe eine in Richtung des sich verbreiternden Flügelabschnitts erstreckende Verlängerung der Scharnierachse (12) umfasst mit mindestens einem sich in Richtung Außenhaut erstreckenden Hebelarm (38), an dem ein sich im Inneren des Flügelabschnitts (10) befindlicher und dort abstützender Aktuator (42) angreift.

7. Flügelabschnitt und Hinterkantenklappe nach Anspruch 6, **dadurch gekennzeichnet, dass** die Verbindung zwischen Hebelarm (38) und Aktuator (42) als Kugelgelenkkopf (40) ausgebildet ist.

8. Luftfahrzeug, **dadurch gekennzeichnet, dass** dieses mindestens einen Flügelabschnitt (10) und Hinterkantenklappe (18) nach einem der vorherigen Ansprüche aufweist.

## Claims

1. Curved wing section (10) for an aircraft, which is curved in a frontal view and has at least one pivotable trailing edge flap (18) that is mounted on the wing section (10) by means of at least one hinge with a hinge axle (12), **characterized in that** in the extension range of the at least one trailing edge flap (18), for a plurality of planes (A,B,C) perpendicular to the hinge axle (12) the outer skin contour (20, 22) of the trailing edge flap (18) is defined by the perpendicular (24) from the hinge axle point (12) onto the upper or lower outer skin (14, 16) of the wing section (10), or the virtual extension thereof, wherein the feet (26) of the perpendicular each define radii with which the upper and lower outer skin contour (28, 30) of the trailing edge flap (18) extend in the flow direction at least by the pivoting range of the trailing edge flap, and in addition the outer skin (14, 16) of the wing section (10) ends at a constant distance immediately in front of the respective foot (26), in each case forming a gap (32, 34).

2. The wing section and trailing edge flap according to Claim 1, **characterized in that** the feet (26) of the perpendicular are defined on at least two intersecting planes and the outer contours (28, 30) in between them are defined via an interpolation between these intersecting planes in the direction of the wingspan.

3. The wing section and trailing edge flap according to Claim 1, **characterized in that** the feet (26) of the perpendicular are defined continuously for each plane (A,B,C) along the hinge axle (12).

4. The wing section and trailing edge flap according to any one of the previous claims, **characterized in that** the gap (32, 34) is closed by a sealing lip mounted on the wing section (10).

5. The wing section and trailing edge flap according to any one of the previous claims, **characterized in that** a plurality of trailing edge flaps (18) with differently oriented hinge axes are mounted thereon, wherein adjacent trailing edge flaps are each connected to one another by means of flexible outer skins.

6. The wing section and trailing edge flap according to any one of the previous claims, **characterized in that** the at least one trailing edge flap comprises an extension of the hinge axle (12) in the direction of the broadening wing section, with at least one lever arm (38) extending in the direction of the outer skin, with which an actuator (42), located inside the wing section (10) and acting as a support there, engages.

7. The wing section and trailing edge flap according to Claim 6, **characterized in that** the connection between lever arm (38) and actuator (42) is designed as a ball head (40).

8. Aircraft, **characterized in that** this comprises at least one wing section (10) and trailing edge flap (18) according to any one of the previous claims.

## Revendications

1. Aile courbe (10) pour un avion, qui est courbe en vue frontale et au moins un volet de bord de fuite pivotant (18), qui est monté au moyen d'au moins une charnière avec un axe de charnière (12) sur l'aile (10), **caractérisé en ce que** dans la zone d'extension d'au moins un volet de bord de fuite (18) pour plusieurs plans (A, B, C) perpendiculairement à l'axe de charnière (12) le contour d'enveloppe extérieure (20, 22) du volet de bord de fuite (18) est déterminé et par le brasage (24) à partir du point d'axe de charnière (12) sur l'enveloppe extérieure supérieure, respectivement inférieure (14, 16) de l'aile (10), respectivement sur l'extension virtuelle, dans laquelle les points d'assemblage par brasage (26) définissent respectivement des rayons, avec lesquels les contours d'enveloppe extérieure (28, 30) supérieurs et inférieurs du volet de bord de fuite (18) s'étendent dans la direction au moins autour de la zone de pivotement du volet de bord de fuite, et en outre l'enveloppe extérieure (14 , 16) de l'aile (10) aboutit respectivement en formant un interstice (32, 34) en un espacement constant directement avant le point d'assemblage par brasage respectif (26).

2. Aile et volet de bord de fuite selon la revendication 1, **caractérisée en ce que** la détermination des points d'assemblage par brasage (26) a lieu sur au moins deux plans de coupe et les contours d'enveloppe extérieure (28, 30) entre ceux-ci a lieu par l'intermédiaire d'une interpolation entre ces deux plans de coupe dans la direction d'envergure.

3. Aile et volet de bord de fuite selon la revendication 1, **caractérisée en ce que** la détermination des points d'assemblage par brasage (26) a lieu en continu pour chaque plan (A, B, C) le long de l'axe de charnière (12).

4. Aile et volet de bord de fuite selon une des revendications précédentes, **caractérisé en ce que** l'interstice (32, 34) est fermé à partir d'une lèvre d'étanchéité ménagée sur l'aile(10).

5. Aile et volet de bord de fuite selon une des revendications précédentes, **caractérisée en ce que** plusieurs volets de bord de fuite (18) avec des axes de charnières orientés différemment sont montés dessus, dans laquelle des volets de bord de fuite respectivement voisins sont reliés les uns aux autres au moyen d'enveloppes extérieures flexibles.

6. Aile et volet de bord de fuite selon une des revendications précédentes, **caractérisée en ce que** au moins un volet de bord de fuite comprend une extension de l'axe de charnière (12) s'étendant dans la direction de l'aile qui s'élargit, avec au moins un bras de levier (38) s'étendant dans la direction de l'enveloppe extérieure, sur lequel intervient un actionneur (42) se trouvant à l'intérieur de l'aile (10) et s'y appuyant.

7. Aile et volet de bord de fuite selon la revendication 6, **caractérisée en ce que** la liaison entre le bras de levier (38) et l'actionneur (42) est réalisée comme une tête à articulation sphérique (40).

8. Avion, **caractérisé en ce que** celui-ci présente au moins une aile (10) et un volet de bord de fuite (18) selon une des revendications précédentes.
